# EUROPEAN PATENT SPECIFICATION

(11) **EP 3 059 342 B1**
(45) Date of publication and mention of the grant of the patent: **09.11.2022**
(21) Application number: 15156016.6
(22) Date of filing: 20.02.2015
(51) Int. Cl.: D06F 58/50, D06F 25/00, D06F 58/20

(54) **METHOD OF OPERATING A LAUNDRY TREATMENT APPARATUS USING OPERATION STATE INFORMATION**
VERFAHREN ZUM BETRIEB EINER WÄSCHEBEHANDLUNGSVORRICHTUNG UNTER VERWENDUNG VON BETRIEBSZUSTANDSINFORMATIONEN
PROCÉDÉ D'EXPLOITATION D'UN APPAREIL DE TRAITEMENT DE BLANCHISSERIE UTILISANT DES INFORMATIONS D'ÉTAT DE FONCTIONNEMENT

(43) Date of publication of application: 24.08.2016
(73) Proprietor: Electrolux Appliances Aktiebolag, 105 45 Stockholm (SE)
(72) Inventor: Rizzi, Marco, 33080 Porcia (PN) (IT); Bondi, Martino, 33080 Porcia (PN) (IT); Girotto, Terenzio, 33080 Porcia (PN) (IT)
(74) Representative: Electrolux Group Patents

(56) References cited:
- EP-A1- 2 333 149
- EP-A1- 2 733 252
- EP-A1- 2 733 256
- EP-A1- 2 832 918
- JP-A- 2007 209 603
- JP-A- 2009 291 226
- US-A1- 2010 242 297

## Description

The invention relates to a method of controlling a treatment process in a laundry treatment apparatus that operates in dependency of operation and temperature states. In a laundry treatment apparatus such operation method is implemented.

EP 2 333 149 A1 suggests a heat pump tumble dryer in which the ambient temperature is detected or estimated. A compressor of the heat pump system is cooled by flowing ambient air conveyed by a blower over the compressor. Depending on the ambient air temperature the activation of the blower may be increased (lower cooling capacity at higher ambient air temperature) or lowered (higher cooling capacity at lower ambient air temperature).

EP 2 733 256 A1 discloses a method for operating a heat pump laundry treatment apparatus, wherein cooling air is circulated within a cabinet of the treatment apparatus to remove heat and humidity from the cabinet to prevent potential condensation on electronic parts which could cause malfunction of the electronic parts. When during operation of the heat pump apparatus a conveyance capacity T_on of the cooling fan unit is equal or below a minimum conveyance capacity value T_en the conveyance capacity is increased. The minimum conveyance capacity value T_en is determined based on on e or more input variables and/or at least one environmental parameter. The environmental parameter may be the ambient temperature and an input variable may be a working parameter of the heat pump system, including the temperature of the coolant.

JP 2009-291226 A discloses a method for operating a heat pump dryer, wherein humidity condensed on piping inside a cabinet of the dryer is removed by evaporation. A first temperature sensor detects a refrigerant temperature at the inlet of compressor. A second temperature sensor detects the temperature inside the cabinet. When a detected refrigerant temperature T1 is lower than a temperature t and lower than the air temperature detected with sensor, then condensation of humidity occurs at piping of the compressor or the evaporator. Then the air blower for introducing outside air into the cabinet is operated.

EP 2 733 252 A1 discloses a method for operating a heat pump dryer. A cooling fan unit is arranged close to a compressor to remove heat from the heat pump system during a drying operation. Thereby the heat power of the compressor is balanced in the closed loops of the refrigerant and process air. An operation parameter set of the cooling fan unit is modified or changed in dependency of one or more input variables. Input variables may be an ambient temperature of the dryer and a working parameter of the dryer, e.g. a starting temperature of the heat pump detected at the condenser outlet.

JP 2007209603 A discloses a method for operating a washer dryer, where condensation of humidity on inner surfaces of a cabinet of the washer dryer is prevented by activating an ambient air blower in dependency of temperature detected by ambient temperature sensor.

US 2010/0242297 A1 discloses a heat pump dryer wherein a compressor cooling blower removes heat from the inside of a housing of the dryer. The cooling blower is operated in dependency of a temperature detected inside the housing, e.g. at a refrigerant temperature at a condenser of the heat pump.

EP 2 832 918 A1 discloses a method for operating a laundry treatment apparatus comprising at least one temperature sensor, wherein a detected temperature signal is indicative of the ambient temperature of the treatment apparatus. A detected temperature may be an ambient temperature, a temperature in the refrigerant loop, e.g. at the condenser outlet, a temperature of electronic boards. A temperature sensor may be located at a position in the air flow of the process air.

It is an object of the invention to provide a method of controlling a laundry treatment process in which problems that may be caused by air humidity are eliminated or reduced.

The invention is defined in claims 1 and 13, respectively. Particular embodiments are set out in the dependent claims.

A method of controlling a laundry treatment process in a laundry treatment apparatus is provided. The laundry treatment apparatus is for example a dryer or a washer dryer. The laundry treatment process (process may also be denoted as 'cycle' herein) must not be limited to a washing and/or drying cycle, but may include all type of laundry treatment that may be performed in a laundry treatment apparatus having a laundry treatment chamber. However preferably the treatment process is a drying or washing cycle and more preferably the method is implemented in a laundry treatment apparatus that provides laundry drying capability by providing a drying air circulation arrangement. In an embodiment the dryer or washer-dryer is a condensation type dryer or washer-dryer, in particular a dryer or washer-dryer using a heat pump system or an electrical heater for heating drying air.

The treatment apparatus for implementing the method comprises a cabinet which houses the treatment apparatus components. Further a laundry treatment chamber is provided in which laundry stored in the chamber can be treated (at least according to the control method of treatment). The treatment apparatus comprises a drying air circulation arrangement for circulating drying air through the treatment chamber. The apparatus is adapted to implement at least one drying cycle - which however is not necessarily the laundry treatment process to be implemented by the control method. By the drying air circulation arrangement the drying air is guided in a drying air channel of the treatment apparatus from a drying air outlet of the treatment chamber to a drying air inlet of the treatment chamber, such that the treatment chamber and the drying air channel form a drying air loop.

The treatment apparatus further comprises a first temperature detector unit adapted to detect a first temperature state indicative of the ambient temperature being ambient to the treatment apparatus or treatment apparatus cabinet. The first temperature detector unit indicates the first temperature state directly or indirectly (direct or indirect ambient air temperature measurement) and/or may indicate the first temperature state permanently or under specific conditions. If the first temperature state is correctly indicated only under specific conditions, preferably the first temperature state is derived or determined or accepted for the control method, when it is additionally determined that such specific conditions are reliably existent.

An ambient air conveying blower is provided which is adapted to flow or circulate ambient air through an internal volume of the apparatus, wherein the internal volume is internal to the cabinet but external to the optional drying air circulation arrangement. This ambient air conveying blower is adapted to exchange or replace internal air by air sucked in from outside the cabinet (the 'ambient' air which is external to the cabinet).

Further the apparatus comprises an operation status unit which is adapted to indicate an operation starting state of the treatment apparatus. Roughly, the operation starting state is an indicator in which way and how long ago the apparatus was operated before; thereby it is e.g. derived whether the currently started laundry treatment process is started with the apparatus being 'cold' or being 'hot'. The operation starting state is derived using physical and/or memory values of the apparatus which give an indirect measure whether the air within the cabinet may have accumulated humidity during a previous treatment process or cycle and whether such humidity may be removed from the cabinet meanwhile. For example a washing cycle executed shortly before starting the current treatment process may result in currently higher in-cabinet air humidity as compared to a cold rinsing cycle executed hours before.

Alternatively or additionally the operation starting state is used as indicator for determining whether the specific conditions are met under which the current measurement value of the sensor delivering the basis for the first temperature state is reliable. Or whether according to an embodiment the first temperature state is retrieved from or is a previously stored value which was stored at a starting phase of a previous treatment cycle.

According to the method the laundry treatment process is started and, in the initial or starting phase of the laundry treatment process, the first temperature state is detected and the operation starting state is retrieved. In dependency of the first temperature state and the operation starting state blower operation parameters are determined. The blower operation parameters are determined such that in dependency of the estimated need, the air within the apparatus cabinet is exchanged by or replaced with ambient air taken in from outside the cabinet. The blower is operated in dependency of the first temperature state and the operation starting state such that depending on the first temperature state and the operation state, internal air (and thus the supposed humidity therein) is removed from the internal volume of the apparatus. Further features of the invention are defined in claim 1 and claim 13.

By determining the blower operation parameters and operating the blower accordingly the risk of condensation of humidity accumulated in the air within the cabinet is eliminated or at least significantly reduced. Electronic components can not be bothered by condensed water. Also long-term reliability of the apparatus is improved by avoiding repeated condensation and re-vaporization or even accumulation of larger amounts of condensed water.

Having determined the blower operation parameters, the blower is operated according to such determined parameters. 'Operating' the blower may also be denoted as 'activating' the blower according to operation parameters (and vice versa if applicable). Herein the term 'blower operation parameters' includes that there is only one operation parameter and/or that only one of the blower operation parameters is modified/determined in dependency of the first temperature state and the operation starting state. The blower operation parameters are preferably a sub-set of operation parameters for operating the apparatus during the laundry treatment process (e.g. washing and/or drying cycle). The blower operation parameters are 'embedded' in operation parameters of the treatment process executed or to be executed.

In an embodiment, operation parameters, which do not relate to blower operation for exchanging the internal air by ambient air, may also be modified in dependency of at least one of the ambient temperature state and the operation starting state. For example in an apparatus having a heat pump system and in a treatment process using the heat pump system, a requirement for a 'warm-up' period of the heat pump system may depend on whether the operation starting state indicates a 'hot' or 'cold' apparatus (operation starting state). Herein the 'first temperature state' may also be denoted as 'ambient temperature state' and vice versa unless specifically indicated.

The 'laundry treatment process' may comprise one treatment cycle (e.g. a drying cycle) or two or more consecutive combined treatment cycles (e.g. comprising a washing cycle and at least one drying cycle). However for the purposes herein and preferably the 'treatment process' is considered to be a 'cycle' and if the 'cycle' is part of a combined treatment process (having more than one cycle) the method determines via the operation starting state and the ambient temperature state whether the cycle presently started is part of a combined treatment process where the presently started cycle is following to an already executed cycle of the combined treatment process. In an embodiment the first temperature state (ambient temperature state) is detected during or before a starting phase of the first cycle of the combined process.

In an embodiment the ambient air conveying blower is a blower that is exclusively dedicated for flowing or circulating ambient air through the internal volume and has no other purpose than exchanging cabinet air with ambient air. However preferably and due to cost reasons, the blower is adapted to cool a component of the apparatus and additionally adapted to flow or circulate at least a portion of the ambient air through the internal volume. In this case it can be said that the conveyance characteristic of the blower is adapted such that as a byproduct the cabinet air is exchanged. For example the blower is blower for cooling the compressor and/or an auxiliary heat exchanger (auxiliary condenser). In case of such double-function blower of course the ambient air is not guided in a separate air passage to and from the component(s) to be cooled, but at least a portion of the ambient (=cooling) air is flowing through the interior of the cabinet.

Preferably the blower operation parameters comprise one or more of: the blower duty ratio, the average blower conveyance rate, the temporal activation profile of the blower, and the rotation speed of the blower. Thereby the blower operation parameters specify whether at all the blower has to exchange air from the cabinet interior and to which extent or intensity. The intensity of blower operation preferably is variably or in multiple intensity stages adapted according to the operation starting state and the first temperature state. Generally: Blower operation parameter is/are a sub-set of operation parameters of laundry treatment program or cycle. Thus determining blower operation parameter is also to be understood as determining operation parameters of laundry treatment program or cycle.

Preferably the operation starting state and the first temperature state are not only used to determine the blower operation parameters, but one or both states are also evaluated to determine other operation parameters for operating the apparatus during execution of the treatment process. For this the method further comprises: selecting first laundry drying operation parameters or second drying operation parameters in dependency of the detected first temperature state and/or in dependency of the detected operation start state.

In an embodiment the laundry treatment program comprises a laundry pre-treatment cycle followed by a treatment (e.g. drying) cycle. Here the method for example further comprises: Selecting a first set of pre-treatment operation parameters or a second set of pre-treatment operation parameters in dependency of the detected first temperature state and/or in dependency of the detected operation start state. Such operation parameters are used for example to control the respective washing and/or drying cycle. The laundry pre-treatment cycle preferably is a washing cycle. In the determining step for example a selection is made between a first washing operation parameter set and a second washing operation parameter set. In an embodiment operation parameters include blower operation parameters for the pre-treatment cycle, such that the anti-condensing operation of the blower is pre-extended to a pre-treatment (e.g. washing) cycle. A pre-treatment cycle may be a washing cycle, a rinsing cycle, a laundry-refresh cycle, a laundry anti-wrinkle cycle, a laundry steaming or sterilizing cycle.

In case the step of determining of the blower and/or overall operation parameters in dependency of the first temperature state and/or the operation starting state means a selection between operation parameter sets, the operation parameters to be selected (and corresponding control routines) differ at least in one or more of the operation parameters. For example they differ in blower activation parameters, like average activation of blower or the blower being not active or not active over most time of washing cycle and the blower being temporally activated.

In a preferred embodiment, the laundry treatment program or laundry treatment cycle is started with standard operation parameters for the laundry treatment program or cycle as selected by the user. Then in the beginning phase of the laundry treatment program or cycle the first temperature state and the operation starting state are determined/detected, and the blower operation parameters are determined based thereon. Thereafter the standard operation parameters are replaced by the determined operation parameters. In an embodiment the standard operation parameters must not be be replaced, if the determined operation parameters are the standard operation parameters. However 'standard' operation parameters may also be replaced by (e.g. identical) 'standard' operation parameters if these are to be applied. In a or this preferred embodiment the 'standard' operation parameters at first instance are independent of first temperature state and operation starting state and are then, after determining the two states and determining/selecting the parameters in dependency of the two states, replaced by the parameters necessary for operating to conform to the two states (unless - as before -the parameters selected according to the two states correspond to the 'standard' operation parameters).

Preferably or generally: The operation starting state and the first temperature state are determined once at the beginning of the treatment program or cycle and are used during the complete execution of the treatment program or cycle (no re-detection of first temperature state and/or operation starting state). Preferably: The operation starting state and the first temperature state are known, before determining the operation parameter set or blower operation parameter set for the treatment program or cycle in dependency of the first temperature state and operation starting state.

In an embodiment the blower is operated according to the blower operation parameters for removing humidity from the internal volume of the apparatus according to one of the following: a) before starting a treatment cycle for drying the laundry in the laundry treatment chamber, or b) shortly after starting a treatment cycle for treatment of the laundry, or c) the blower is operated during the whole or essentially during the whole treatment cycle. For example the blower is operated before a drying cycle when a washing cycle is preceding the drying cycle. On the other hand, if there is only a drying cycle, the blower is preferably operated with starting the drying cycle, if there is need for removing the humidity. Preferably the 'start' of a drying cycle as such includes starting drying air circulation and/or heating the drying air.

In case that the method step 'determining the blower operation parameters' is or includes selection of the appropriate one of the laundry treatment process operation parameter sets in dependency of the first temperature state and operation starting state, then the first laundry treatment process operation parameter set differs from the second laundry treatment process operation parameter set in at least one of the following control parameters:
- the laundry treatment chamber being or comprising a drum, and the drum rotation parameter is one or more of: the rotation speed, the clockwise/counterclockwise duty ratio and the drum speed duty cycle;
- power supplied to a heating device provided for heating drying air or a washing liquid (when using an electric heater the power is the electrical power, while in heatpump systems the heating power is the power supplied to the compressor of the heat pump circuit);
- operation parameters considered for determining or indicative of the time of the end of the laundry treatment process or cycle;
- number of repetitions of a laundry treatment process step in the course of the same laundry treatment process;
- parameters used for determining the end of the laundry treatment process or cycle;
- duration of the laundry treatment process or cycle; and
- speed or duty cycle of a blower conveying the drying air in the drying air loop.

Operation parameters used for determining or indicative of the time of the end of the laundry treatment process or cycle may be the laundry weight, an electrical parameter of a motor power supply, such as the current, the voltage or frequency of power supplied to a motor or a parameter derived therefrom like the motor torque or power.

Parameters used for determining the end of the laundry treatment process or cycle may be laundry humidity content, an electrical parameter of a motor power supply, such as the current, the voltage or frequency of power supplied to a motor or a parameter derived therefrom like the motor torque or power.

In an embodiment the operation starting state is determined exclusively or additionally (in addition to using temperature states like the below described deltaT1 and deltaT2) by status information provided by e.g. a memory of the control unit. For this the operation status unit comprises a counter for counting a time elapsed since the last execution of a washing or drying cycle and wherein the operation status unit indicates the operation starting state in dependency of at least one of:
- the time counted since the last execution of a washing or drying cycle,
- the last operation being a washing or a drying cycle,
- the started or starting drying cycle is part of a washing and drying program, and
- the first temperature state as detected by the first temperature detector unit.

Preferably the operation status unit is at least partially implemented by or at least partially integrated in a control unit of the apparatus. If for example the time duration since the end of a prior laundry treatment cycle is below a threshold, it is considered to be a pre-treatment cycle and the operation starting state and/or first temperature state of that prior laundry treatment cycle is used for determining the blower operation parameters.

In an embodiment of the foregoing, the blower is activated according to the operation parameters under one or more of the following conditions:
- the time since execution of a previous washing or drying cycle is below a cooling down threshold,
- the previously executed cycle is a washing or a drying cycle, and
- the first temperature state indicates a low or very low ambient temperature state.

Preferably the blower is not a blower restricted to exchange the in-cabinet air, but is a blower that is (mainly) adapted to cool a component of the apparatus by flowing or circulating ambient air. Then the operation of the blower is additionally controlled in dependency of the requirement for cooling the component. To meet the first blower function the operation of the blower is determined for cooling the component such as to have a first activation duty ratio or a first average flow rate. To meet the second blower function the operation of the blower is determined for flowing or circulating the ambient air through the internal volume of the apparatus with a second activation duty ratio or a second average flow rate (in dependency of the first temperature state and the operation starting state). Having both determined, the blower is operated according to the higher one of the first and second activation duty ratio or first and second average flow rate. Thus the blower is operated by control steps that results in higher cooling or ambient air circulation. If e.g. a higher cooling rate of a component of the heat pump system is required than already provided under the operation parameters determined in dependency of the two states, then the duty ratio is increased, for example by inserting an activation/operation time of blower in a period where the blower would be deactivated according to the control parameters determined in dependency of the two states.

As an example: Normally the blower cooling requirement of a heat pump component (compressor) is lower than the air exchange requirement for removing humid air from cabinet under the conditions of cold ambient temperature. Namely the cold ambient air removes heat from heat pump system already with small flow rate - if cooling is required at all.

Preferably the treatment apparatus is a washer dryer and the laundry treatment chamber comprises a tub and a drum rotatably arranged within the tub. Preferably the tub has at least one inlet opening fluidly connected to the drying air circulation arrangement and/or at least one outlet opening fluidly connected to the drying air circulation arrangement.

In an embodiment the treatment apparatus comprises one or more of the following: a) a circular or essentially circular loading opening for loading and unloading the laundry treatment chamber, b) a porthole door for closing the loading opening of the laundry treatment chamber, c) an input unit adapted to input user selections by a user, and d) a motor for rotating the laundry treatment chamber being a drum.

The laundry treatment apparatus according to the invention, in particular a dryer or a washer dryer, comprises: a cabinet which houses the treatment apparatus components; a laundry treatment chamber for treating laundry therein; optionally a drying air circulation arrangement for circulating drying air through the treatment chamber, wherein in this optional feature the drying air is guided in a drying air channel from a treatment chamber outlet to a treatment chamber inlet such that the treatment chamber and the drying air channel form a drying air loop; a first temperature detector unit adapted to detect a first temperature state indicative of the ambient temperature being ambient to the treatment apparatus or treatment apparatus cabinet; an ambient air conveying blower adapted to flow or circulate ambient air through an internal volume of the apparatus, wherein the internal volume is internal to the cabinet but external to the optional drying air circulation arrangement; an operation status unit adapted to indicate the operation starting state of the treatment apparatus; and a control unit adapted for controlling execution of a laundry treatment process according to any of the previous embodiments.

In an embodiment of the apparatus, the control unit may at least partially implement the first temperature detector unit and/or at least partially the operation status unit

In case of the apparatus being a dryer having no washing function, preferably the drum is part of drying air loop having the inlet and outlet for the drying air (see above) and otherwise closed side and/or circumferential walls. In case the apparatus is a washer dryer, the tub is part of drying air loop and the rotatable drum is arranged therein.

The above and below features and/or method steps can be combined in any way to form combinations or sub-combinations. Method steps are respectively applicable to the apparatus by implementing the steps via the control unit. Vice versa the structural features are applicable in any combination or sub-combination in the method by providing their respective function as method step or part of the method step.

Reference is made in detail to preferred embodiments of the invention, examples of which are illustrated in the accompanying figures, which show:
- Fig. 1: an exemplary outer appearance of a laundry treatment apparatus, which is a washer-dryer in the depicted example,
- Fig. 2: a schematic representation of the arrangement of components of the laundry treatment apparatus of Fig. 1 having a heat pump system,
- Fig. 3: a schematic block diagram of components of the treatment apparatus of Fig. 1,
- Fig. 4: a time diagram showing the temporal behavior of a temperature difference (deltaT2) at different apparatus operation start states,
- Fig. 5: a table exemplifying different conditions for activating/non-activating a cooling air blower,
- Fig. 6a: a duty cycle of the cooling air blower activated for removing cabinet indoor humidity,
- Fig.6b: as in Fig. 6a, however additional blower activation added for meeting compressor cooling requirement,
- Fig. 6c: blower activation according to compressor cooling requirement without need to remove cabinet indoor humidity, and
- Fig. 7: an exemplary flow diagram for modifying program parameters in dependency of operation starting state and temperature state.

Fig. 1 shows an outer appearance of a washer dryer 1 which is an embodiment for a laundry treatment apparatus. In other embodiments the laundry treatment apparatus may be dryer, in particular a heat pump system dryer or an electrically heated dryer. The washer dryer has a cabinet 5 or housing defining the outer appearance. The laundry 32 is loaded through a loading opening 2 which is a loading passage between the front side of the front wall of the cabinet and a front opening of a tub 22 and drum 28 receiving the laundry. A gasket, which is sealing the opening at the front wall and the front opening of the tub 22, is not separately shown. In case the laundry treatment apparatus is a dryer, no tub is provided and the drying air inlet and outlet (24, 26 below) is formed at the drum 28 or a frame structure thereat.

The front side of the loading opening/passage 2 is closed by a loading door 3 or porthole which has a handle 4 for opening and closing the door 3. At the front side of the washer dryer 1 an input panel 42 is provided having input elements for inputting program selections and/or program options by the user. The panel 42 further has indicators for indicating the selected programs/options and/or the status of a running program. In case of a washer dryer a detergent drawer is arranged at the side of the panel 42 for receiving liquid and/or solid detergents and other treatment agents by manual filling respective compartments by the user. Optionally additional compartments or openings may be provided for receiving treatment agents for a drying and/or dry-cleaning process. In case of a dryer the drawer may be a condensate drawer adapted for collecting condensate water that is removed from the laundry during the drying cycle.

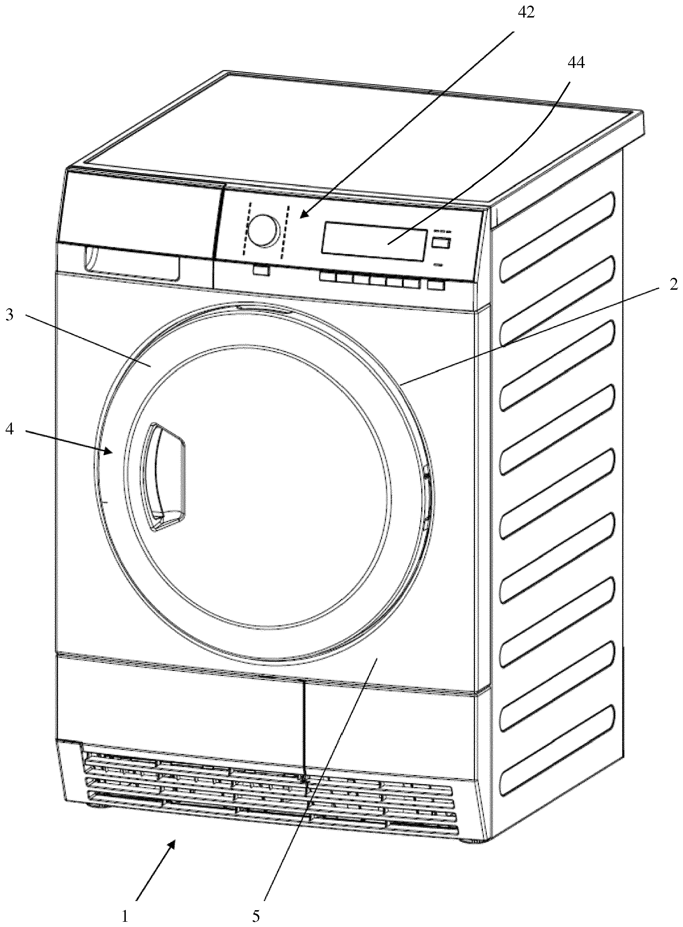

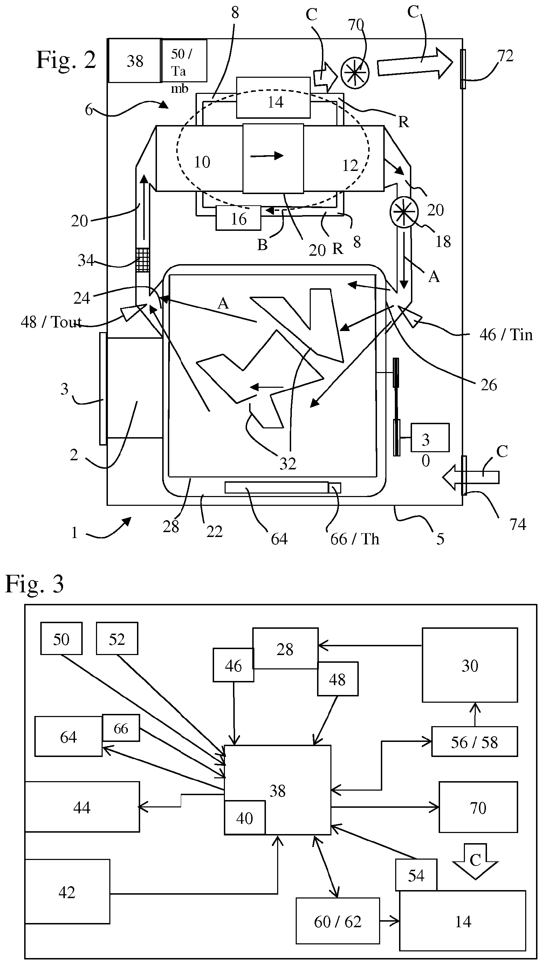

Fig. 2 schematically shows an exemplary arrangement of components in the interior of the the cabinet 5 of the washer dryer 1 in side view. In this embodiment the drying function of the washer dryer is provided by a heat pump system 6 that has a refrigerant loop 8 for circulating the refrigerant as indicated by flow B using refrigerant lines R between the components of system 6. In the refrigerant loop 8 serially arranged are a first heat exchanger 10 (here an evaporator) for cooling the drying air and condensing the water taken from the laundry 32, a compressor 14 circulating the refrigerant, a second heat exchanger (condenser) 12 for heating the drying air, and an expansion device 16 for expanding the compressed refrigerant into the first heat exchanger 10.

In this embodiment the compressor 14 is cooled with ambient cooling air C. The ambient air C is sucked into the cabinet 5 by the activity of a compressor blower 70 through air openings arranged at the outer walls of the cabinet. The air that is partially passed over the compressor 14 is conveyed by the blower 70 and leaves the cabinet through an air outlet opening 72. Fig. 2 shows one inlet and one outlet opening 74, 72. In embodiments a plurality of inlet and/or outlet openings 74, 72 may be provided. The openings may be arranged at different positions. In an embodiment the blower 70 may suck in the ambient air through an inlet opening (e.g. 72) and may then blow the ambient air C for cooling to the compressor 14. After having passed the compressor the air is then exiting the cabinet 5 through the one or more outlet openings 72.

As shown, in a washer dryer 1 the components of the heat pump system 6 are arranged above the tub 22 (but in other embodiments the components may be arranged or may be partially arranged below the tub). In case the laundry treatment apparatus is a dryer without washing function, the components of the heat pump system 6 are preferably arranged below the drum 28 in a basement of the apparatus. Preferably in this case the one or more air inlet openings are also arranged at the basement. The basement may comprise one main outlet opening for discharging the air flown over the compressor and auxiliary or ventilation openings may be provided at the upper backside of the dryer (compare outlet 72) which exhaust(s) a portion of the air sucked in by blower 70 and which portion serves for exchanging the air of the interior space of the cabinet 5.

During the drying cycle, drying air is circulated within a drying air loop, wherein the drying air A is conveyed by a blower 18 arranged in a drying air channel 20 in which also the first and second heat exchangers 10, 12 are arranged. The drying air loop is formed by the drying air channel 20 and the tub 22, wherein the drying air channel 20 guides the drying air exhausted from the tub 22 through: an outlet 24, an optional fluff filter 34, the first heat exchanger 10, the second heat exchanger 12, and back through a drying air inlet 26 into the tub 22. Within the tub 22 the rotatable drum 28 is arranged as a laundry chamber receiving the laundry 32. The laundry is loaded/unloaded through drum and tub openings (indicated by 2) covered by the loading door 3 to be opened and closed by a user. The drum 28 is driven by a drum motor 30. At a sump within the tub 22 or in fluid connection with the tub 22 a heater 64 is arranged for heating the washing liquid used for washing the laundry 32. In thermal contact with the heater 64 a heater temperature sensor 66 is arranged.

In the embodiment, where the laundry treatment apparatus is a washer dryer as shown, preferably the motor 30 for driving the drum 28 and the motor for driving the blower 18 are different motors. In case the laundry treatment apparatus is a dryer without a washing function, preferably the drum 28 and blower 18 are driven by the same motor 30. In case the laundry treatment apparatus is a dryer without washing function, preferably no tub 22 is provided and the drying air inlet 26 and outlet 24 are provided on opposite sides of the drum 28, while the drum mantle has no drying air inlet or outlet.

Fig. 3 shows a schematic block diagram of components of the laundry dryer/apparatus which provide signal to and/or signals from a control unit 38 controlling the operation of the apparatus 1. The control unit 38 is connected to a memory 40 (like RAM and/or ROM), which is designed to permanently store (e. g. EPROM) data for example for different user selectable programs and program cycles as well as memory for temporarily storing data during a program run.

Via the input panel 42 the user can select the washing and/or drying program to be used and options for the washing and/or drying program. For example via the input panel 42 the user can select the options cupboard-dry, damp-dry or ironing-dry as the final laundry humidity for a drying cycle to be executed. A display 44 is provided to indicate different information to the user. For example the program state, the start or interrupt of the program, the time-to-end (TTE) of the running cycle, the selected options or the like.

The control unit 38 receives temperature signals or values from:
- an optional ambient temperature sensor 50 (Tamb) that may be integrated in or located at the control unit 38 to detect the ambient temperature (additionally to or alternatively to the below described deltaT detection and/or the heater temperature Th),
- a refrigerant temperature sensor 52 that is arranged at the refrigerant loop, for example at the condenser outlet or the compressor outlet, or a sensor located at the capillary between the condenser and evaporator to detect the temperature of the refrigerant (Tr)
- a compressor temperature sensor 54 that indicates the operation temperature (Tc) of the compressor 14, for example the compressor motor temperature,
- an outlet temperature sensor 48 that is arranged at the outlet 24 of the tub 22 for detecting the temperature (Tout) of the drying air at this position,
- an inlet temperature sensor 46 that is arranged at the inlet 26 to detect the inlet temperature (Tin) of the drying air at that position, and
- the heater temperature sensor 66 for detecting the temperature Th of the heater 64, which may also be indicative of the ambient temperature Tamb, if the apparatus is freshly started without prior operation for a longer non-operation period.

The drum motor 30 is powered by a drum motor inverter 56 to which a (preferably integrated) drum inverter sensor 58 is associated that sends signals related to the operation of the motor 30 and/or inverter 56 to the control unit 38. Signals Si send form the drum inverter sensor 58 to the control unit 38 are for example one or more of: a motor current, a driving voltage, the power consumed, a motor torque, a power or torque gradient, and a motor or inverter temperature.

Further in this embodiment the compressor motor is powered by a compressor inverter 60 to which a compressor inverter sensor 62 is associated, wherein the sensor 62 may be integrated in or at the compressor inverter 60. The compressor inverter sensor 62 sends signals Sc related to the compressor motor and/or inverter 60 to the control unit 38. The signals are or the signal is one or more of: the motor current, the driving voltage, the consumed power, the motor torque, a gradient of the motor power or torque, and an inverter or compressor motor temperature.

It was found that the operation of the apparatus in a drying cycle (dryer or washer-dryer) or in a washing cycle (washer-dryer or washing machine) can be optimized by setting the operation parameters for the drying and/or washing cycle in dependency of the operation starting state and the first temperature state. Optimizing the cycles by setting the adequate parameters is a secondary aspect of this application.

Further it has been found - and this is the primary aspect of this application - that in dependency of the operation starting state and the first temperature state, it might become necessary to remove humidity out of the internal cabinet volume to avoid condensation of humidity at components of the apparatus where normally no water should condense. For example, if the apparatus is operated at cold or very cold ambient temperatures Tamb and a drying cycle is to be executed after a recent washing or drying cycle, air humidity that is contained in the air within the cabinet 5 may condensate at cold internal components. The humidity may condensate at inner walls of the cabinet and flow to unwanted locations where electronics is provided or the humidity may condensate at cold electronic boards (e.g. of inverter 60) and result in unwanted leak currents or malfunction of the electronics.

Preferably implementation of the 'condensation-prevention' method and provision of the respectively adapted apparatus is suggested in a way avoiding additional hardware costs. Preferably no dedicated blower is provided for circulating and/or exchanging the air from the inner volume of the cabinet, but a blower provided anyway is used, e.g. a blower (70) for cooling one or more components (e.g. 14) of the heat pump system 6 or a blower for cooling an electronic board (e.g. 60). Additionally or alternatively no dedicated temperature sensor is provided, but the ambient temperature Tamb is detected using temperature sensors (e.g. 66 and/or 48 and/or 50) provided for other purposes.

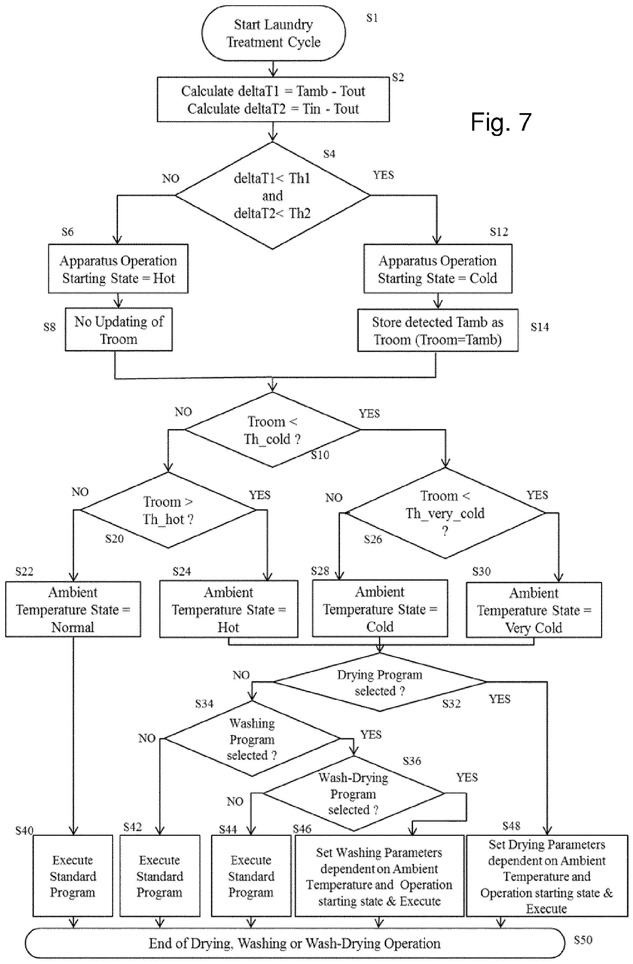

In connection with Fig. 7 a specific embodiment for one implementation is described. Before describing the steps of Fig. 7, first some more basic considerations/explanations are made. The above mentioned risk of condensation is dependent on the ambient temperature, wherein it is assumed that condensation may happen, if humid (possibly warmed-up) air contacts cold surfaces. Thus condensation risk rises with decreasing lower ambient temperature and at components of the apparatus which are not heated up by the apparatus operation, but maintain basically the ambient temperature - here it is assumed that after a longer non-operation time of the apparatus all components attain ambient air temperature. Further the condensation risk rises, if during a currently running treatment cycle and mainly during a preceding treatment cycle humidity escapes from the laundry treatment chamber 28 and/or the process air loop 20/22 into the inner volume of the apparatus 1. Thus the requirement for a condensation-prevention procedure can be derived from determining the ambient temperature and determining the operation starting state of the apparatus.

Relating to determining the operation starting state, it is to be detected/determined whether the apparatus is 'cold', e.g. was not used immediately before or was not used a period before. Or is to be detected/determined whether the apparatus is 'hot', e.g. was used immediately before. As this is a criterion whether 'humid' air may be present in the inner volume of the cabinet 5, in embodiments it can be further considered whether the type of cycle, that was executed before, actually is a cycle that might have resulted in increasing the humidity of the air within the cabinet 5. For example: While a preceding cold rinsing process using water with a temperature of 16°C at ambient temperature of 8°C may result in determining that the operation start state is 'hot', actually the 'cold' rinsing does not result in real increase of air humidity. Preferably in embodiments, the operation starting state is determined using and evaluating temperature measurements and/or using operation history information as for example stored in the memory 40 of the control unit 38.

In an embodiment, which is alternative or additional to the procedure explained in connection with Fig. 7, the apparatus operation starting state may be derived in that the control unit stores the type and/or maximum treatment temperature of a previously finished treatment cycle (e.g. washing, drying, rinsing, steaming or dehydration cycle) and starts a counter for counting the time from the end of the previous cycle until the user starts the next cycle. At the start of the next cycle the operation starting state is determined in dependency of the information about the type and/or maximum treatment temperature and the time elapsed since the end of the previous treatment operation. If for example the time since the last treatment is more than one hour, it is determined that the operation starting state is 'cold'. If for example the time since the last treatment cycle is between 1 hour and 1/2 hour, the operation starting state is 'cold', if the previous treatment was a cold rinsing, while it would be 'hot', if the previous treatment cycle was a washing cycle at 60°C.

In an embodiment of determining the operation starting state further parameters can be considered besides the temperature states (Fig. 7: deltaT1&deltaT2) and/or the states stored in the memory (type of preceding cycle and/or max. temp. of preceding cycle and/or time elapsed since preceding cycle). The amount of humidity escaped to the cabinet interior in the previous cycle may also depend for example on the amount of laundry load and/or type of laundry treated in the previous treatment cycle. Such information on the previous cycle may be stored by the control unit 38 in the memory 40. Some of this information (e.g. laundry type) may have been input by the user when starting the previous treatment cycle or may be determined during execution of the previous cycle, for example by a weight detector (using e.g. motor current and/or torque).

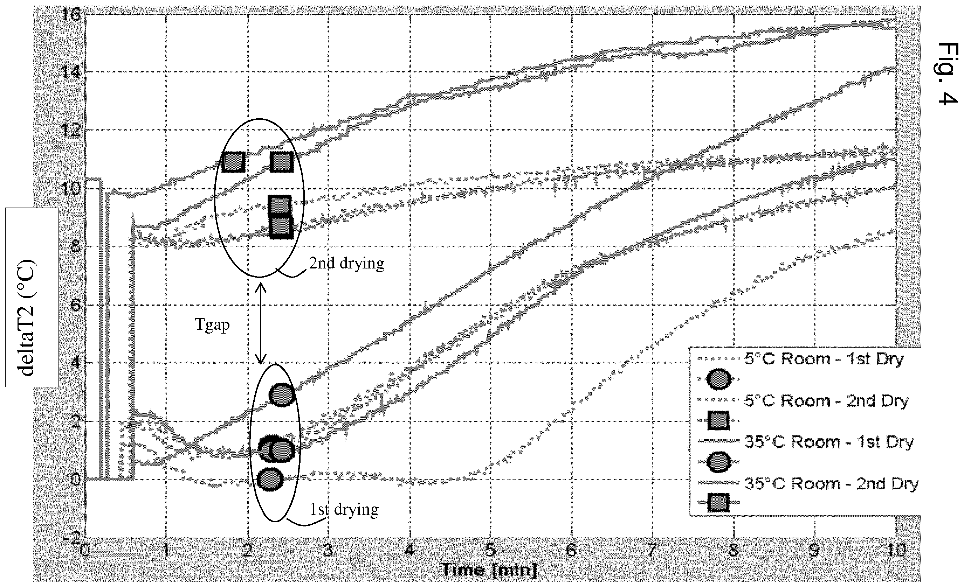

For the Fig. 7 embodiment the operation starting state is determined on the basis of the first and second temperature differences deltaT1 and delta D2. The background of the second temperature difference deltaT2 is explained in connection with Fig. 4. Fig. 4 shows a time diagram of the temporal behavior of the second temperature difference (deltaT2) at different apparatus operation start states. The second temperature difference is determined by the equation deltaT2 = Tin - Tout, where Tin is the air temperature measured by the sensor 46 positioned at the inlet of the tub 22 (in a dryer it would be the position at or close to the inlet to the drum 28), and where Tout is the air temperature of the drying air detected by the sensor 48 positioned at the outlet 24 of the tub 22 (in a dryer it would be the position at or close to the outlet from the drum 28).

This temperature difference deltaT2 provides a relative or normalized parameter from which conclusion to the operation starting state can be made. In Fig. 4 the upper curves of the deltaT2 have been recorded at the beginning of a second drying cycle, i.e. the washer-dryer 1 has a 'hot' operation staring state after a first drying cycle was performed immediately before. The lower curves show the function deltaT2 at a first drying run, i.e. the washer-dryer is in a 'cold' operation starting state. The curves have been recorded at different ambient temperatures (5°C and 35°C) using otherwise different operation parameters (laundry load, laundry type, ...). As indicated by the arrow Tgap, there is a sufficiently discriminating gap for the function deltaT2 (here the difference of Tin - Tout) such that this function of two temperatures detected at two different positions is an adequate first measure for determining whether the apparatus operation starting state is hot or cold.

Fig. 7 is an exemplary flow diagram for modifying program parameters in dependency of operation starting state and temperature state. As mentioned above, the primary modification considered herein is the modification of the blower activation or operation parameters, however the modification also relates to parameters for the treatment cycle to be executed which is not or not primarily related to the blower operation parameters.

In step S1 the treatment cycle is started either by the user pressing a start button or by the control unit, for example if timer-controlled operation was inputted by the user. The treatment cycle may be a washing cycle or (preferably) a drying cycle or any other laundry treatment cycle. The first few minutes of the cycle, before the ambient temperature state and the operation starting state has been determined based on the temperature measurements, the cycle is started and controlled according to non-modified standard parameters. The standard parameters preferably are user-adapted in so far as user-inputted program selections and options (final humidity, laundry load, laundry type (e.g. for wool no or reduced drum rotation is set)) are already considered for determining the 'standard' parameters. Such selection of standard parameters has the advantage that the standard parameter set has not to be modified in case that in the following procedure it is determined that no modification is required in dependency of the operation starting state and ambient temperature state.

However in an embodiment the standard parameters only represent unitary starting parameters that only differentiate in dependency of the type of laundry treatment cycle to be executed. Then there is only one unitary starting parameter set for any washing cycle, one unitary starting parameter set for any drying cycle and so on. In this case, when the operation starting state and the ambient temperature state has been determined and it has been determined whether the program parameter set has to be modified (as compared to the standard operation parameters) in dependency of the operation starting state and the ambient temperature state, the unitary starting parameter set is replaced by the standard operation parameter set or the modified parameter set (when the two states require so) and in which sets the user inputted program options are also considered.

Anyway in the starting phase of the cycle, the following temperature values are detected by the temperature sensors:
- ambient temperature Tamb detected by sensor 66 (Tamb = Th)
- drum outlet temperature Tout detected by sensor 48
- drum inlet temperature Tin detected by sensor 46

In embodiments the ambient temperature Tamb may be detected by sensor 50 (Tamb) or sensor 54 (Tc) or sensor 52 (Tr) or sensor 62 (Sc). Or the ambient temperature Tamb is retrieved by a combination of two or more of the temperature signals of sensors 46, 48, 50, 52, 62, 66.

Considering the detailed embodiment where Tamb = Th or where the Tamb is determined according to the just mentioned embodiment, it is evident that such temperature detection reflects the correct ambient temperature only when the apparatus 1 (here washer dryer) was not operated for a longer period. Thus it is first determined, whether the apparatus is in the operation starting state 'Cold' or 'Hot'. For this in S2 the two temperature differences deltaT1 = Tamb - Tout and deltaT2 = Tin - Tout are calculated. deltaT2 was already discussed in connection with Fig. 4 and is a second indicator whether the apparatus is Hot or Cold due to a previous operation. deltaT2 is most sensitive, if the previous treatment cycle was a drying cycle as deltaT2 is high when the drying air channel and the heater (electrical or second heat exchanger 12) have been heated up during the previous drying cycle. Preferably for determining deltaT2, the drying air blower 18 is operated for a while (1 - 2 min) before measuring the temperatures Tin and Tout.

For improving reliability of determining the operation starting state, deltaT1 is also considered, which is a first indicator being most sensitive when the previous cycle was a washing cycle. In case a washing was performed before and in particular when the ambient temperature state is 'Cold' or 'Very Cold', the heater 64 and thus sensor 66 is heated up as compared to the ambient temperature which is in this case reflected by Tout. Namely, as the 'preceding' cycle is a washing cycle, no heating up by drying air happened and the sensor 48 is still thermalized to ambient temperatures despite the execution of the washing cycle.

It is to be noted that for determining the operation starting state preferably the heater temperature Th is considered in deltaT1. However, for determining the ambient temperature Tamb in S14 another temperature than Th can be considered. For example any of the above mentioned sensors. Considering costs, it is however clearly preferred that the three existing temperature sensors for Th, Tin and Tout are considered. This is true in particular for washer-dryers. In an embodiment not further described and particular recommended for dryers, only two temperature sensors may be provided and evaluated. Namely in dryers no heater for heating the washing liquid is provided and it is consequently not required to determine deltaT1 as the preceding cycle can not be a washing cycle. The embodiment flow diagram of Fig. 7 can be simplified for a dryer in that only deltaT2 is considered for determining the operation starting state and Tamb may be determined using Tout (sensor 46) or any of sensors 48, 50, 52, 54, or 62 (sensors 52, 54 and 62 only in case of dryer with heat pump system 6).

Continuing with Fig. 7, if both, deltaT1 and deltaT2, indicate a cold apparatus state at S4, the operation starting state = 'Cold' is determined at S12. Otherwise the operation starting state = 'Hot' is determined at S6. In S14, since the state is 'Cold', the room temperature Troom is stored to be the ambient temperature Tamb (Tamb = Th) as determined by sensor 66 (or any other sensor as mentioned above). The value of Troom is permanently stored in the memory 40 unless updated in S14. On the other hand, in S8, since the state is 'Hot', it is known that Tamb = Th can not be a reliable indicator for the actual ambient or room temperature. Therefore in S8 Troom is not updated by the value of Tamb. Thus when progressing through S6/S8, Troom is the value that was determined at the beginning of the previous cycle (or any prior cycle where S14 was included) and not the value Tamb (Th) of the currently started cycle.

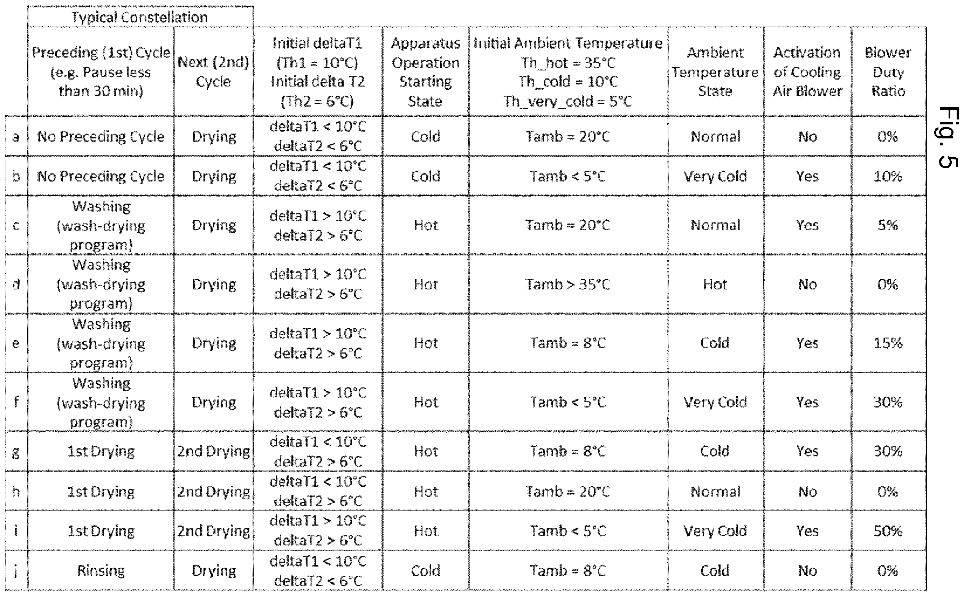

By using the value of Troom and by the decisions in steps S10, S20 and S26 it is determined whether the ambient temperature state is 'Normal', 'Hot', 'Cold' or 'Very Cold'. An example for the thresholds used in S10, S20 and S26 is Th_cold = 10°C, Th_hot = 35°C and Th_very_cold = 5°C, respectively (compare table in Fig. 5).

In case of 'Normal' ambient temperature state the cycle is continued based on the standard parameter set for the started treatment cycle (S22 → S40). As mentioned above, the 'standard' parameter set can be a set on which basis the cycle has been started in S1 or the unitary starting parameter set is replaced by the standard parameter set (considering user selected options).

In case of 'Hot', 'Cold' and 'Very Cold' ambient temperature states (S24, S28 and S30) in decisions S32, S34 and S36 it is then determined whether the presently executed cycle is a drying cycle, a washing cycle or a wash-drying cycle and in dependency thereon it is decided whether the standard parameters for the respective cycle presently executed need not to be modified (S42 and S44) or need to be modified in dependency of the ambient temperature state and the operation starting state (S46 and S48). Examples for modification (and non-modification) are given in connection with Fig. 5. The cycle is then executed until end using the non-modified parameter set (standard parameter set) or the modified operation parameter set (S50).

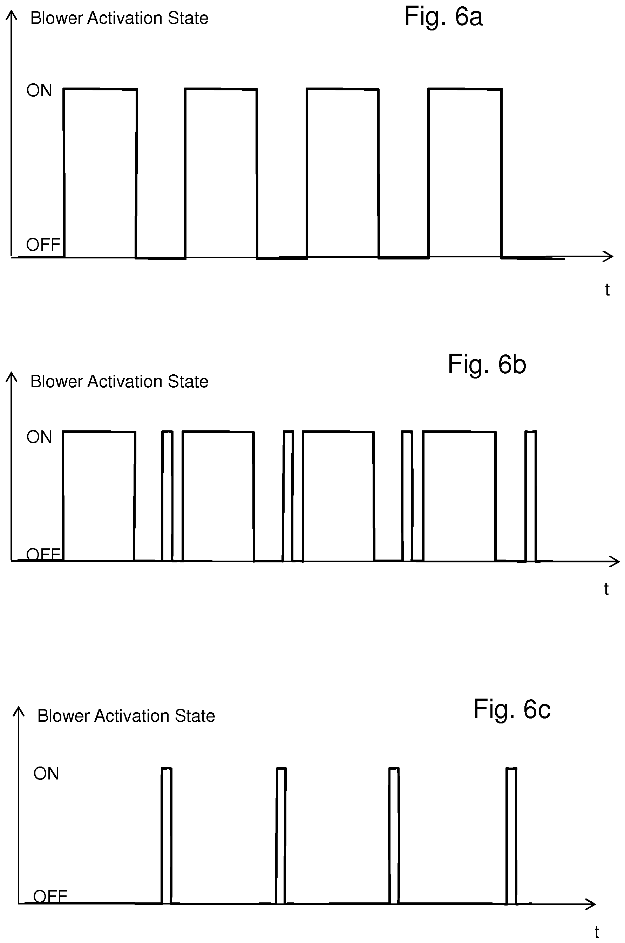

Fig. 5 is a table listing some examples for starting conditions of a treatment cycle where in dependency of the conditions the cooling air blower is activated and to which degree or whether it is not activated. In the example of line a) a drying cycle is started without a preceding treatment cycle. DeltaT1 is below the first threshold Th1 (10°C) and deltaT2 is below the second threshold Th2 (6°C). Thus it is concluded that the operation starting state of the apparatus is 'cold' (Fig. 7: S12). As the operation starting state is 'cold' the current ambient temperature Tamb is detected (Fig. 7: S14). As Th_cold = 10°C < Tamb = 20°C < Th_hot = 35°C, it is determined that the ambient temperature state is 'Normal'. The drying cycle can be executed using standard parameters which means that the cooling air blower 70 (compressor blower) is not activated due to lack of 'condensation prevention' requirement and that also the standard cycle parameters for the drying cycle as such do not have to be modified due to the detected operation starting state and the detected ambient temperature state. It is to be noted that when 'Activation of Cooling Air Blower' = 'No' in the table, this does not mean that the compressor blower is not activated at all during the drying cycle - see below case of Fig. 6c.

The example in line b) of the table is similar to example a). However, the ambient temperature Tamb < 5°C such that the ambient temperature state is 'Very Cold'. Although there is no preceding treatment cycle and the operation starting state is 'cold', the compressor blower 70 is operated at a low duty ratio of 10% to remove the humidity that escapes from the closed drying air loop 20/22 (dryer: 20/28) during the running drying cycle.

In the line c)-example a wash-drying program is executed where a washing cycle is followed by a drying cycle. For simplicity it is assumed that the laundry amount that has been washed can directly been dried without user interference. For example if 1/2 maximum washing load is washed, this amount can be directly dried without deteriorating the drying efficiency. In case nearly maximum washing load has been washed in the washing cycle, it is recommended that the user removes 1/2 of the load before continuing the drying to have an improved drying. The removed 1/2 load of washed laundry is then dried in a 2nd drying cycle after the user has removed the dried 1/2 load of laundry and reloaded the previously removed washed and undried laundry. Then actually the sequence would be washing cycle (full load at operation starting state 'cold'), 1st drying (1/2 load at operation starting state 'hot') and 2nd drying (1/2 load at operation starting state 'hot') - assuming that the user has time to activate the cycles without too long pauses.

Continuing in line c) of Fig. 5, as the ambient temperature state is 'Normal' (Tamb = 20°C), the compressor blower is activated at a low duty cycle of 5%. The situation in the example of line d) is similar with the difference that the ambient temperature state is 'Hot' (Tamb > 35°C) such that no blower activity for humidity removal is required. Different to the c)-example, in the e)-example the ambient temperature state is 'Cold' and the duty ratio of the blower is 15%. In the f)-example the ambient temperature state is even lower, namely 'Very Cold' (Tamb < 5°C) and the duty ratio is increased to 30% due to the high tendency of condensation when small volumes of washing steam have escaped during the preceding washing cycle and small volumes of 'hot' drying air escapes during the running drying cycle.

Only for completeness it is mentioned that the operation of the apparatus 1 may be generally prevented by the control unit 38 if it is detected that the ambient temperature Tamb is below a temperature safety threshold, which e.g. is set to 3°C. Additionally or alternatively the operation may be generally prevented if it is detected that the ambient temperature is above a temperature safety threshold, which e.g. is set to 40°C.

In the example of line g), two drying cycles are following to each other with not too long interruption such that the operation starting state is 'Hot'. The ambient temperature state is 'Cold' (Tamb = 8°C) such that in consequence the cooling air blower 70 is operated at a duty ratio of 30%. In the h)-example the ambient temperature state is 'Normal' (Tamb = 20°C) such that no cooling is required (blower duty ratio = 0%). In the i)-example the ambient temperature state is 'Very Cold' such that intensive blower activity is required (blower duty ratio = 50%).

The example of line j) shows that despite the fact that two treatment cycles follow to each other with close temporal proximity the operation starting state is 'Cold'. Here the preceding first cycle is a cold rinsing cycle that does not release significant humidity into the cabinet interior. Here despite the ambient temperature state 'Cold' no blower activity is required for moisture removal (duty ratio = 0%).

In the above and the following the 'blower duty cycle' is exemplary for the strength of activity of the cooling air conveyance blower that is activated and as far as it is activated for the removal of humidity from the interior of the apparatus cabinet 5. Instead of the duty ratio or in addition to the duty ratio the blower 'activity' may be determined by the blower conveyance rate. The blower conveyance rate may be a maximum conveyance rate or an average conveyance rate that is dependent on one or more of: the blower speed, the duty ratio, and the total time of blower activation. The duty ratio may for example be defined by a fixed period and it is considered which portion of the fixed period the blower is activated. If for example the fixed period is 6 min and the blower is operated at maximum speed for 2 min, the duty ratio is 2/6 or 33.33%. Preferably the operation mode of the blower is ON/OFF (i.e. maximum rotation/zero rotation). However the blower may be designed as variable speed blower which has at least two rotation speeds > 0 rpm. Then the duty ratio may be calculated from the percentage operation of maximum speed. Preferably the lapsing time is intersected in consecutive periods of the fixed period each having the duty ratio.

Figs. 6a to 6c show embodiments of the duty cycle of the cooling air blower activated for removing cabinet indoor humidity. Fixed periods of each 6 min and one following to the other are schematically shown. In Fig. 6a the blower is repeatedly operated for 4 min (switched ON) and then switched OFF for 2 min. The duty ratio is 66.66%. In this example the cooling requirement for cooling the compressor 14 by flowing the ambient cooling air C over the compressor is lower than 66.66% duty ratio. This means that the compressor 14 is 'overcooled' by the blower activity and more heat is removed from the compressor by activity of blower 70 than actually would be required for efficient cooling of the compressor. The need for exchanging the internal air in the cabinet with ambient air for condensation prevention is higher than heat removal requirement of the heat pump system 6.

In the example of Fig. 6b the duty ratio is increased as compared to Fig. 6a. Short 'ON' intervals are inserted in the 'OFF'-periods used in Fig. 6a. The short 'ON' intervals have a duration of about 0.5 min such that the total duty ratio is 75%. Actually this duty ratio is attributed to the cooling need of the heat pump system - here the cooling need of the compressor 14. Here the cooling need and thus the duty ratio for cooling the compressor exceeds the need for exchanging the internal air within the apparatus cabinet 5 - with the consequence that an 'over-exchange' of the internal air is effected.

Fig. 6c shows a case where the blower duty ratio for exchanging the internal air from the cabinet is 0%, while the compressor 14 has some need for cooling at a duty ratio of about 8.33% (0.5 min cooling within the 6 min fixed periods).

### Reference Numeral List

- 1: heat pump washer dryer
- 2: loading opening
- 3: door
- 4: handle
- 5: cabinet/ housing
- 6: heat pump system
- 8: refrigerant loop
- 10: first heat exchanger (evaporator)
- 12: second heat exchanger (condenser)
- 14: compressor
- 16: expansion device
- 18: blower
- 20: drying air channel
- 22: tub
- 24: outlet
- 26: inlet
- 28: drum (laundry compartment)

- 30: drum motor
- 32: laundry
- 34: fluff filter
- 38: control unit
- 40: memory
- 42: input panel
- 44: display
- 46: inlet temperature sensor (Tin)
- 48: outlet temperature sensor (Tout)
- 50: ambient temperature sensor (Tamb)
- 52: refrigerant temperature sensor (Tr)
- 54: compressor temperature sensor (Tc)
- 56: drum inverter
- 58: drum inverter sensor (Si)
- 60: compressor inverter
- 62: compressor inverter sensor (Sc)
- 64: electrical heater
- 66: heater temperature sensor (Th)
- 70: compressor blower
- 72: air outlet
- 74: ambient air inlet

- A: drying air flow
- B: refrigerant flow
- C: cooling air flow
- R: refrigerant line
- Tin: inlet temperature
- Tout: outlet temperature
- Th: heater temperature
- deltaT1 =: Tamb - Tout
- deltaT2 =: Tin - Tout

## Claims

1. A method of controlling a laundry treatment process in a laundry treatment apparatus (1), in particular in a dryer or in a washer dryer, wherein the treatment apparatus comprises:
a cabinet (5) which houses the treatment apparatus components,
a laundry treatment chamber (22, 28) adapted for treating laundry therein,
a drying air circulation arrangement (20, 22) adapted to circulate drying air through the treatment chamber (22, 28), wherein the drying air is guided in a drying air channel (20) from a treatment chamber outlet (24) to a treatment chamber inlet (26) such that the treatment chamber and the drying air channel form a drying air loop,
a first temperature detector unit adapted to detect a first temperature state indicative of the ambient temperature (Tamb) being ambient to the treatment apparatus (1) or treatment apparatus cabinet (5),
an ambient air conveying blower (70) adapted to flow or circulate ambient air through an internal volume of the apparatus (1), wherein the internal volume is internal to the cabinet (5) but external to the drying air circulation arrangement (20, 22), and
an operation status unit (46, 48, 66; 38) adapted to indicate an operation starting state of the treatment apparatus (1),
wherein the method comprises the steps of:
starting a laundry treatment process,
detecting the first temperature state and retrieving the operation starting state,
determining blower operation parameters in dependency of the first temperature state and the operation starting state, and
operating the blower (70) according to the blower operation parameters;
**characterized in that**
the method further comprises
detecting the following temperature values in the starting phase of the laundry treatment process:
- a drum outlet temperature (Tout) detected by an outlet temperature sensor (48),
- a drum inlet temperature (Tin) detected by an inlet temperature sensor (46), and
- an ambient temperature (Tamb), wherein the ambient temperature (Tamb) is detected by an ambient temperature sensor (50) or a heater temperature sensor (66) or a refrigerant temperature sensor (52) or a compressor temperature sensor (54) or a compressor inverter sensor (62) or the ambient temperature (Tamb) is retrieved by a combination of two or more of the temperature signals of the sensors: inlet temperature sensor (46), outlet temperature sensor (48), ambient temperature sensor (50), refrigerant temperature sensor (52), compressor inverter sensor (62), heater temperature sensor (66), and
determining the operating starting state on the basis of a first and a second temperature difference (deltaT1, deltaT2),
wherein the first temperature difference (deltaT1) is the difference between the ambient temperature (Tamb) and the drum outlet temperature (Tout), and
wherein the second temperature difference (deltaT2) is the difference between the drum inlet temperature (Tin) and the drum outlet temperature (Tout).

2. The method of claim 1, wherein
the blower is dedicated to flow or to circulate ambient air through the internal volume, or
the blower (70) is adapted to cool a component (14) of the apparatus and additionally adapted to flow or circulate at least a portion of the ambient air through the internal volume of the apparatus.

3. The method of claim 1 or 2, wherein the blower operation parameters comprise one or more of:
- the blower duty ratio,
- the average blower conveyance rate,
- the temporal activation profile of the blower, and
- the rotation speed of the blower.

4. The method of any of the preceding claims, the method further comprising:
selecting first treatment operation parameters or second treatment operation parameters in dependency of the detected first temperature state (Tamb) and in dependency of the detected operation start state (deltaT1, deltaT1).

5. The method of any of the preceding claims, wherein the laundry treatment program comprises a laundry pre-treatment cycle followed by a treatment cycle and wherein the method further comprises: selecting a first set of pre-treatment operation parameters or a second set of pre-treatment operation parameters in dependency of the detected first temperature state (Tamb) and in dependency of the detected operation start state (deltaT1, deltaT2).

6. The method of any of the preceding claims,
wherein the laundry treatment program or laundry treatment cycle is started with standard operation parameters for the laundry treatment program or cycle as selected by the user, and
wherein in the beginning phase of the laundry treatment program or cycle, after having determined the blower operation parameters, the standard operation parameters are replaced by the determined operation parameters.

7. The method of any of the preceding claims, wherein the blower (70) is operated according to the operation parameters for removing humidity from the internal volume of the apparatus (1)
before starting a treatment cycle for treating the laundry in the laundry treatment chamber (22, 28), or
shortly after starting a treatment cycle for treating the laundry, or
the blower (70) is operated during the whole or essentially during the whole treatment cycle.

8. The method of any of the preceding claims, wherein, in the step of determining the blower operation parameters, first or second laundry treatment process operation parameters are selected in dependency of the first temperature state and the operation starting state, wherein the first laundry treatment process operation parameters are different from the second laundry treatment process operation parameters in at least one of the following control parameters:
- the laundry treatment chamber (22, 28) being or comprising a drum (28), and the drum rotation parameter is one or more of: the rotation speed, the clockwise/counterclockwise duty ratio and the drum speed duty cycle;
- power supplied to a heating device (12, 64) provided for heating drying air or a washing liquid;
- operation parameters considered for determining or indicative of the time of the end of the laundry treatment process or cycle;
- number of repetitions of a laundry treatment process step in the course of the same laundry treatment process;
- parameters used for determining the end of the laundry treatment process or cycle;
- duration of the laundry treatment process or cycle; and
- speed or duty cycle of a blower (18) conveying the drying air in the drying air circulation arrangement (20, 22).

9. The method of any of the preceding claims, wherein the operation status unit (46, 48, 66; 38) comprises a counter adapted to count a time elapsed since the last execution of a treatment cycle and wherein the operation status unit indicates the operation starting state additionally in dependency of at least one of:
- the time counted since the last execution of a treatment (in particular washing or drying) cycle,
- the last operation being a washing or a drying cycle,
- the started or starting treatment cycle is part of a washing and drying program, and
- the first temperature state as detected by the first temperature detector unit (48, 66).

10. The method of any of the preceding claims, wherein the blower (70) is activated according to the operation parameters under one or more of the following conditions:
- the time since execution of a previous treatment cycle is below a cooling down threshold,
- the previously executed cycle is a washing or a drying cycle, and
- the first temperature state (Th, Tamb) indicates a low or very low ambient temperature state.

11. The method of any of the preceding claims,
wherein the blower (70) is further adapted to cool a component (14) of the apparatus (1) by flowing or circulating ambient air (C) and wherein the operation of the blower is additionally controlled in dependency of the requirement for cooling the component,
wherein, when the operation of the blower (70) is determined for cooling the component (14) to have a first activation duty ratio or a first average flow rate and is determined for flowing or circulating the ambient air through the internal volume of the apparatus with a second activation duty ratio or a second average flow rate, then the blower is operated according to the higher one of the first and second activation duty ratio or first and second average flow rate.

12. The method of any of the preceding claims, wherein the treatment apparatus (1) is a washer dryer and the laundry treatment chamber (22, 28) comprises a tub (22) and a drum (28) rotatably arranged within the tub.

13. Laundry treatment apparatus (1), in particular a dryer or a washer dryer, comprising:
a cabinet (5) which houses the treatment apparatus components,
a laundry treatment chamber (22, 28) adapted for treating laundry therein,
a drying air circulation arrangement (20, 22) adapted to circulate drying air through the treatment chamber (22, 28), wherein the drying air is guided in a drying air channel (20) from a treatment chamber outlet (24) to a treatment chamber inlet (26) such that the treatment chamber and the drying air channel form a drying air loop,
a first temperature detector unit adapted to detect a first temperature state indicative of the ambient temperature (Tamb) being ambient to the treatment apparatus or treatment apparatus cabinet (5),
an ambient air conveying blower (70) adapted to flow or circulate ambient air through an internal volume of the apparatus, wherein the internal volume is internal to the cabinet (5) but external to the drying air circulation arrangement (20, 22),
an operation status unit (46, 48, 66; 38) adapted to indicate the operation starting state of the treatment apparatus,
a drum outlet temperature (Tout) detected by an outlet temperature sensor (48),
a drum inlet temperature (Tin) detected by an inlet temperature sensor (46),
for detecting the ambient temperature (Tamb): an ambient temperature sensor (50) or a heater temperature sensor (66) or a refrigerant temperature sensor (52) or a compressor temperature sensor (54) or a compressor inverter sensor (62) or a combination of two or more of the temperature signals of the sensors: inlet temperature sensor (46), outlet temperature sensor (48), ambient temperature sensor (50), refrigerant temperature sensor (52), compressor inverter sensor (62), heater temperature sensor (66), and
a control unit (38) adapted to control execution of a laundry treatment process according to any of the previous claims.

## Patentansprüche

1. Verfahren zum Steuern eines Wäschebehandlungsprozesses in einer Wäschebehandlungseinrichtung (1), insbesondere in einem Trockner oder in einem Waschtrockner, wobei die Behandlungseinrichtung Folgendes umfasst:
ein Gehäuse (5), das die Behandlungseinrichtungskomponenten beherbergt,
eine Wäschebehandlungskammer (22, 28), die zum Behandeln von Wäsche darin ausgelegt ist,
eine Trocknungsluftzirkulationsanordnung (20, 22), die dazu ausgelegt ist, Trocknungsluft durch die Behandlungskammer (22, 28) zu zirkulieren, wobei die Trocknungsluft in einem Trocknungsluftkanal (20) von einem Behandlungskammerauslass (24) zu einem Behandlungskammereinlass (26) derart geführt wird, dass die Behandlungskammer und der Trocknungsluftkanal einen Trocknungsluftkreislauf bilden,
eine erste Temperaturdetektoreinheit, die dazu ausgelegt ist, einen ersten Temperaturzustand zu detektieren, der die Umgebungstemperatur (TUmg) anzeigt, die die Behandlungseinrichtung (1) oder das Behandlungseinrichtungsgehäuse (5) umgibt,
ein Umgebungsluftfördergebläse (70), das dazu ausgelegt ist, Umgebungsluft durch ein Innenvolumen der Einrichtung (1) zu strömen oder zu zirkulieren, wobei sich das Innenvolumen innerhalb des Gehäuses (5), jedoch außerhalb der Trocknungsluftzirkulationsanordnung (20, 22) befindet, und
eine Betriebsstatuseinheit (46, 48, 66; 38), die dazu ausgelegt ist, einen Betriebsstartzustand der Behandlungseinrichtung (1) anzuzeigen,
wobei das Verfahren die folgenden Schritte umfasst:
Starten eines Wäschebehandlungsprozesses,
Detektieren des ersten Temperaturzustands und Erhalten des Betriebsstartzustands,
Bestimmen von Gebläsebetriebsparametern in Abhängigkeit von dem ersten Temperaturzustand und dem Betriebsstartzustand, und
Betreiben des Gebläses (70) gemäß den Gebläsebetriebsparametern;
**dadurch gekennzeichnet, dass**
das Verfahren ferner Folgendes umfasst
Detektieren der folgenden Temperaturwerte in der Startphase des Wäschebehandlungsprozesses:
- einer Trommelauslasstemperatur (Taus), die durch einen Auslasstemperatursensor (48) detektiert wird,
- einer Trommeleinlasstemperatur (Tein), die durch einen Einlasstemperatursensor (46) detektiert wird, und
- einer Umgebungstemperatur (TUmg), wobei die Umgebungstemperatur (TUmg) durch einen Umgebungstemperatursensor (50) oder einen Heizungstemperatursensor (66) oder einen Kältemitteltemperatursensor (52) oder einen Verdichtertemperatursensor (54) oder einen Verdichterinvertersensor (62) detektiert wird oder die Umgebungstemperatur (TUmg) erhalten wird durch eine Kombination von zwei oder mehreren der Temperatursignale der Sensoren: Einlasstemperatursensor (46), Auslasstemperatursensor (48), Umgebungstemperatursensor (50), Kältemitteltemperatursensor (52), Verdichterinvertersensor (62), Heizungstemperatursensor (66), und
Bestimmen des Betriebsstartzustands auf der Basis einer ersten und einer zweiten Temperaturdifferenz (deltaT1, deltaT2),
wobei die erste Temperaturdifferenz (deltaT1) die Differenz zwischen der Umgebungstemperatur (TUmg) und der Trommelauslasstemperatur (Taus) ist, und
wobei die zweite Temperaturdifferenz (deltaT2) die Differenz zwischen der Trommeleinlasstemperatur (Tein) und der Trommelauslasstemperatur (Taus) ist.

2. Verfahren nach Anspruch 1, wobei
das Gebläse dazu vorgesehen ist, Umgebungsluft durch das Innenvolumen zu strömen oder zu zirkulieren, oder
das Gebläse (70) dazu ausgelegt ist, eine Komponente (14) der Einrichtung zu kühlen, und zusätzlich dazu ausgelegt ist, zumindest einen Teil der Umgebungsluft durch das Innenvolumen der Einrichtung zu strömen oder zu zirkulieren.

3. Verfahren nach Anspruch 1 oder 2, wobei die Gebläsebetriebsparameter eines oder mehrere von Folgendem umfassen:
- die relative Gebläseeinschaltdauer,
- die durchschnittliche Gebläseförderrate,
- das zeitliche Aktivierungsprofil des Gebläses, und
- die Drehzahl des Gebläses.

4. Verfahren nach einem der vorhergehenden Ansprüche, wobei das Verfahren ferner Folgendes umfasst: Auswählen von ersten Behandlungsbetriebsparametern oder zweiten Behandlungsbetriebsparametern in Abhängigkeit von dem detektierten ersten Temperaturzustand (TUmg) und in Abhängigkeit von dem detektierten Betriebsstartzustand (deltaTl, deltaT1).

5. Verfahren nach einem der vorhergehenden Ansprüche, wobei das Wäschebehandlungsprogramm einen Wäschevorbehandlungszyklus gefolgt von einem Behandlungszyklus umfasst und wobei das Verfahren ferner Folgendes umfasst: Auswählen eines ersten Satzes von Vorbehandlungsbetriebsparametern oder eines zweiten Satzes von Vorbehandlungsbetriebsparametern in Abhängigkeit von dem detektierten ersten Temperaturzustand (TUmg) und in Abhängigkeit von dem detektierten Betriebsstartzustand (deltaTl, deltaT2).

6. Verfahren nach einem der vorhergehenden Ansprüche,
wobei das Wäschebehandlungsprogramm oder der Wäschebehandlungszyklus mit Standardbetriebsparametern für das Wäschebehandlungsprogramm oder den Wäschebehandlungszyklus wie durch den Benutzer ausgewählt gestartet wird, und
wobei in der Anfangsphase des Wäschebehandlungsprogramms oder -zyklus, nachdem die Gebläsebetriebsparameter bestimmt wurden, die Standardbetriebsparameter durch die bestimmten Betriebsparameter ersetzt werden.

7. Verfahren nach einem der vorhergehenden Ansprüche, wobei das Gebläse (70) gemäß den Betriebsparametern betrieben wird zum Entfernen von Feuchtigkeit aus dem Innenvolumen der Einrichtung (1)
vor Starten eines Behandlungszyklus zum Behandeln der Wäsche in der Wäschebehandlungskammer (22, 28), oder
kurz nach Starten eines Behandlungszyklus zum Behandeln der Wäsche, oder
das Gebläse (70) während des gesamten oder im Wesentlichen während des gesamten Behandlungszyklus betrieben wird.

8. Verfahren nach einem der vorhergehenden Ansprüche, wobei, in dem Schritt zum Bestimmen der Gebläsebetriebsparameter, erste oder zweite Wäschebehandlungsprozessbetriebsparameter in Abhängigkeit von dem ersten Temperaturzustand und dem Betriebsstartzustand ausgewählt werden, wobei sich die ersten Wäschebehandlungsprozessbetriebsparameter von den zweiten Wäschebehandlungsprozessbetriebsparametern in mindestens einem der folgenden Steuerparameter unterscheiden:
- die Wäschebehandlungskammer (22, 28) ist oder umfasst eine Trommel (28), und der Trommeldrehungsparameter ist eines oder mehrere von Folgendem: die Drehzahl, die relative Einschaltdauer im Uhrzeigersinn/gegen den Uhrzeigersinn und der Arbeitszyklus der Trommeldrehzahl;
- Leistung, die einer Heizvorrichtung (12, 64) zugeführt wird, die zum Heizen von Trocknungsluft oder einer Waschflüssigkeit bereitgestellt ist;
- Betriebsparameter, die zum Bestimmen berücksichtigt werden oder die die Zeit des Endes des Wäschebehandlungsprozesses oder -zyklus anzeigen;
- Anzahl von Wiederholungen eines Wäschebehandlungsprozessschritts im Verlauf desselben Wäschebehandlungsprozesses;
- Parameter, die zum Bestimmen des Endes des Wäschebehandlungsprozesses oder -zyklus verwendet werden;
- Dauer des Wäschebehandlungsprozesses oder -zyklus; und
- Drehzahl oder Arbeitszyklus eines Gebläses (18), das die Trocknungsluft in der Trocknungsluftzirkulationsanordnung (20, 22) fördert.

9. Verfahren nach einem der vorhergehenden Ansprüche, wobei die Betriebsstatuseinheit (46, 48, 66; 38) einen Zähler umfasst, der dazu ausgelegt ist, eine Zeit zu zählen, die seit der letzten Ausführung eines Behandlungszyklus vergangen ist, und wobei die Betriebsstatuseinheit den Betriebsstartzustand zusätzlich in Abhängigkeit von mindestens einem von Folgendem anzeigt:
- der Zeit, die seit der letzten Ausführung eines Behandlungszyklus (insbesondere Wasch- oder Trocknungszyklus) gezählt wurde,
- dass die letzte Operation ein Wasch- oder ein Trocknungszyklus ist,
- dass der gestartete oder startende Behandlungszyklus Teil eines Wasch- und Trocknungsprogramms ist, und
- dem ersten Temperaturzustand wie durch die erste Temperaturdetektoreinheit (48, 66) detektiert.

10. Verfahren nach einem der vorhergehenden Ansprüche, wobei das Gebläse (70) gemäß den Betriebsparametern unter einer oder mehreren der folgenden Bedingungen aktiviert wird:
- die Zeit seit Ausführung eines vorhergehenden Behandlungszyklus liegt unter einem Abkühlungsschwellenwert,
- der zuvor ausgeführte Zyklus ist ein Wasch- oder ein Trocknungszyklus, und
- der erste Temperaturzustand (TH, TUmg) zeigt einen niedrigen oder sehr niedrigen Umgebungstemperaturzustand an.

11. Verfahren nach einem der vorhergehenden Ansprüche,
wobei das Gebläse (70) ferner dazu ausgelegt ist, eine Komponente (14) der Einrichtung (1) durch Strömen oder Zirkulieren von Umgebungsluft (C) zu kühlen, und wobei der Betrieb des Gebläses zusätzlich in Abhängigkeit von dem Erfordernis zum Kühlen der Komponente gesteuert wird,
wobei, wenn der Betrieb des Gebläses (70) zum Kühlen der Komponente (14) als eine erste relative Aktivierungseinschaltdauer oder eine erste durchschnittliche Strömungsrate aufweisend bestimmt wird und zum Strömen oder Zirkulieren der Umgebungsluft durch das Innenvolumen der Einrichtung mit einer zweiten relativen Aktivierungseinschaltdauer oder einer zweiten durchschnittlichen Strömungsrate bestimmt wird, dann das Gebläse gemäß der höheren der ersten und zweiten relativen Aktivierungseinschaltdauer oder der ersten und zweiten durchschnittlichen Strömungsrate betrieben wird.

12. Verfahren nach einem der vorhergehenden Ansprüche, wobei die Behandlungseinrichtung (1) ein Waschtrockner ist und die Wäschebehandlungskammer (22, 28) einen Bottich (22) und eine Trommel (28), die drehbar in dem Bottich angeordnet ist, umfasst.

13. Wäschebehandlungseinrichtung (1), insbesondere ein Trockner oder ein Waschtrockner, umfassend:
ein Gehäuse (5), das die Behandlungseinrichtungskomponenten beherbergt,
eine Wäschebehandlungskammer (22, 28), die zum Behandeln von Wäsche darin ausgelegt ist,
eine Trocknungsluftzirkulationsanordnung (20, 22), die dazu ausgelegt ist, Trocknungsluft durch die Behandlungskammer (22, 28) zu zirkulieren, wobei die Trocknungsluft in einem Trocknungsluftkanal (20) von einem Behandlungskammerauslass (24) zu einem Behandlungskammereinlass (26) derart geführt wird, dass die Behandlungskammer und der Trocknungsluftkanal einen Trocknungsluftkreislauf bilden,
eine erste Temperaturdetektoreinheit, die dazu ausgelegt ist, einen ersten Temperaturzustand zu detektieren, der die Umgebungstemperatur (TUmg) anzeigt, die die Behandlungseinrichtung oder das Behandlungseinrichtungsgehäuse (5) umgibt,
ein Umgebungsluftfördergebläse (70), das dazu ausgelegt ist, Umgebungsluft durch ein Innenvolumen der Einrichtung zu strömen oder zu zirkulieren, wobei sich das Innenvolumen innerhalb des Gehäuses (5), jedoch außerhalb der Trocknungsluftzirkulationsanordnung (20, 22) befindet,
eine Betriebsstatuseinheit (46, 48, 66; 38), die dazu ausgelegt ist, den Betriebsstartzustand der Behandlungseinrichtung anzuzeigen,
eine Trommelauslasstemperatur (Taus), die durch einen Auslasstemperatursensor (48) detektiert wird,
eine Trommeleinlasstemperatur (Tein), die durch einen Einlasstemperatursensor (46) detektiert wird,
zum Detektieren der Umgebungstemperatur (TUmg): einen Umgebungstemperatursensor (50) oder einen Heizungstemperatursensor (66) oder einen Kältemitteltemperatursensor (52) oder einen Verdichtertemperatursensor (54) oder einen Verdichterinvertersensor (62) oder eine Kombination von zwei oder mehreren der Temperatursignale der Sensoren: Einlasstemperatursensor (46), Auslasstemperatursensor (48), Umgebungstemperatursensor (50), Kältemitteltemperatursensor (52), Verdichterinvertersensor (62), Heizungstemperatursensor (66), und
eine Steuereinheit (38), die dazu ausgelegt ist, eine Ausführung eines Wäschebehandlungsprozesses nach einem der vorhergehenden Ansprüche zu steuern.

## Revendications

1. Procédé de commande d'un processus de traitement de linge dans un appareil de traitement de linge (1), plus particulièrement dans un sèche-linge ou un lave/sèche-linge, l'appareil de traitement comprenant :
un caisson (5) qui abrite les composants de l'appareil de traitement,
une chambre de traitement de linge (22, 28) adaptée à traiter du linge qu'elle contient,
un agencement de circulation d'air de séchage (20, 22) adapté à faire circuler de l'air de séchage au travers de la chambre de traitement (22, 28), l'air de séchage étant guidé dans un canal d'air de séchage (20) depuis une sortie de chambre de traitement (24) jusqu'à une entrée de chambre de traitement (26) de telle manière que la chambre de traitement et le canal d'air de séchage forment une boucle d'air de séchage,
une unité de détection de première température adaptée à détecter un premier état de température indiquant la température ambiante (Tamb), qui est ambiante pour l'appareil de traitement (1) ou le caisson (5) de l'appareil de traitement,
une soufflante de conduction d'air ambiant (70) adaptée à faire s'écouler ou faire circuler de l'air ambiant au travers d'un volume intérieur de l'appareil (1), le volume intérieur étant intérieur au caisson (5) mais extérieur à l'agencement de circulation d'air de séchage (20, 22), et
une unité de situation de fonctionnement (46, 48, 66 ; 38) adaptée à indiquer un état de lancement de fonctionnement de l'appareil de traitement (1),
le procédé comprenant les étapes suivantes :
le lancement d'un processus de traitement de linge,
la détection du premier état de température et la récupération de l'état de lancement de fonctionnement,
la détermination de paramètres de fonctionnement de soufflante en fonction du premier état de température et de l'état de lancement de fonctionnement, et
la mise en fonctionnement de la soufflante (70) selon les paramètres de fonctionnement de soufflante ;
le procédé étant **caractérisé en ce qu'**il comprend en outre
la détection des valeurs de température suivantes dans la phase de lancement du processus de traitement de linge :
- une température de sortie de tambour (Tout) détectée par un capteur de température de sortie (48),
- une température d'entrée de tambour (Tin) détectée par un capteur de température d'entrée (46), et
- une température ambiante (Tamb), la température ambiante (Tamb) étant détectée par un capteur de température ambiante (50) ou un capteur de température d'élément chauffant (66) ou un capteur de température de frigorigène (52) ou un capteur de température de compresseur (54) ou un capteur d'onduleur de compresseur (62), ou la température ambiante (Tamb) étant récupérée par une combinaison d'au moins deux des signaux de température des capteurs : capteur de température d'entrée (46), capteur de température de sortie (48), capteur de température ambiante (50), capteur de température de frigorigène (52), capteur d'onduleur de compresseur (62), capteur de température d'élément chauffant (66), et
la détermination de l'état de lancement de fonctionnement sur la base d'un premier et d'un deuxième écart de température (deltaT1, deltaT2),
le premier écart de température (deltaT1) représentant l'écart entre la température ambiante (Tamb) et la température de sortie de tambour (Tout), et
le deuxième écart de température (deltaT2) représentant l'écart entre la température d'entrée de tambour (Tin) et la température de sortie de tambour (Tout) .

2. Procédé selon la revendication 1, dans lequel
la soufflante se consacre à faire s'écouler ou à faire circuler de l'air ambiant au travers du volume intérieur, ou
la soufflante (70) est adaptée à refroidir un composant (14) de l'appareil et adaptée en outre à faire s'écouler ou faire circuler au moins une partie de l'air ambiant au travers du volume intérieur de l'appareil.

3. Procédé selon la revendication 1 ou 2, dans lequel les paramètres de fonctionnement de soufflante comprennent au moins un des paramètres suivants :
- le facteur de marche de soufflante,
- le débit de conduction moyen de soufflante,
- le profil d'activation temporelle de la soufflante, et
- la vitesse de rotation de la soufflante.

4. Procédé selon l'une quelconque des revendications précédentes, le procédé comprenant en outre :
la sélection de premiers paramètres de fonctionnement de traitement ou de deuxièmes paramètres de fonctionnement de traitement en fonction du premier état de température (Tamb) détecté et en fonction de l'état de lancement de fonctionnement (deltaT1, deltaT2) détecté.

5. Procédé selon l'une quelconque des revendications précédentes, dans lequel le programme de traitement de linge comprend un cycle de prétraitement de linge suivi d'un cycle de traitement, et le procédé comprenant en outre : la sélection d'un premier ensemble de paramètres de fonctionnement en prétraitement ou d'un deuxième ensemble de paramètres de fonctionnement en prétraitement en fonction du premier état de température (Tamb) détecté et en fonction de l'état de lancement de fonctionnement (deltaT1, deltaT2) détecté.

6. Procédé selon l'une quelconque des revendications précédentes,
dans lequel le programme de traitement de linge ou le cycle de traitement de linge est lancé avec des paramètres de fonctionnement standards pour le programme ou le cycle de traitement de linge, sélectionnés par l'utilisateur, et
dans lequel, dans la phase de début du programme ou du cycle de traitement de linge, après que les paramètres de fonctionnement de soufflante ont été déterminés, les paramètres de fonctionnement standards sont remplacés par les paramètres de fonctionnement déterminés.

7. Procédé selon l'une quelconque des revendications précédentes, dans lequel la soufflante (70) fonctionne selon les paramètres de fonctionnement pour éliminer l'humidité du volume intérieur de l'appareil (1),
avant le lancement d'un cycle de traitement pour traiter le linge dans la chambre de traitement de linge (22, 28), ou
peu de temps après le lancement d'un cycle de traitement pour traiter le linge, ou
la soufflante (70) fonctionne pendant la totalité du cycle de traitement ou sensiblement pendant la totalité du cycle de traitement.

8. Procédé selon l'une quelconque des revendications précédentes, dans lequel, à l'étape de détermination des paramètres de fonctionnement de soufflante, des premiers ou deuxièmes paramètres de fonctionnement de processus de traitement de linge sont sélectionnés en fonction du premier état de température et de l'état de lancement de fonctionnement, les premiers paramètres de fonctionnement de processus de traitement de linge étant différents des deuxièmes paramètres de fonctionnement de processus de traitement de linge au regard d'au moins un des paramètres de commande suivants :
- la chambre de traitement de linge (22, 28) étant ou comprenant un tambour (28), et le paramètre de rotation de tambour étant : la vitesse de rotation et/ou le facteur de marche dans le sens horaire/dans le sens antihoraire et/ou le rapport cycle de la vitesse de tambour ;
- une puissance délivrée à un dispositif chauffant (12, 64) servant à chauffer l'air de séchage ou un liquide de lavage ;
- des paramètres de fonctionnement intervenant dans la détermination de l'heure de fin du processus ou du cycle de traitement de linge ou indiquant celle-ci ;
- un nombre de répétitions d'une étape de processus de traitement de linge au cours du même processus de traitement de linge ;
- des paramètres utilisés pour déterminer la fin du processus ou du cycle de traitement de linge ;
- une durée du processus ou du cycle de traitement de linge ; et
- une vitesse ou un rapport cyclique d'une soufflante (18) conduisant l'air de séchage dans l'agencement de circulation d'air de séchage (20, 22) .

9. Procédé selon l'une quelconque des revendications précédentes, dans lequel l'unité de situation de fonctionnement (46, 48, 66 ; 38) comprend un compteur adapté à compter un temps écoulé depuis la dernière exécution d'un cycle de traitement, et dans lequel l'unité de situation de fonctionnement indique l'état de lancement de fonctionnement en outre en fonction :
- du temps compté depuis la dernière exécution d'un cycle de traitement (plus particulièrement de lavage ou de séchage), et/ou
- du dernier fonctionnement, à savoir un cycle de lavage ou un cycle de séchage, et/ou
- du fait que le cycle de traitement lancé ou en cours de lancement fait partie d'un programme de lavage et de séchage, et/ou
- du premier état de température détecté par l'unité de détection de première température (48, 66) .

10. Procédé selon l'une quelconque des revendications précédentes, dans lequel la soufflante (70) est activée selon les paramètres de fonctionnement sous une ou plusieurs des conditions suivantes :
- le temps depuis l'exécution d'un cycle de traitement précédent est en deçà d'un seuil de refroidissement,
- le cycle précédemment exécuté est un cycle de lavage ou de séchage, et
- le premier état de température (Th, Tamb) indique un état de température ambiante bas ou très bas.

11. Procédé selon l'une quelconque des revendications précédentes,
dans lequel la soufflante (70) est adaptée en outre à refroidir un composant (14) de l'appareil (1) en faisant s'écouler ou en faisant circuler de l'air ambiant (C), et dans lequel le fonctionnement de la soufflante est en outre commandé en fonction du besoin de refroidir le composant,
dans lequel, lorsqu'il est déterminé que le fonctionnement de la soufflante (70) sert à refroidir le composant (14) avec un premier facteur de marche d'activation ou un premier débit moyen et qu'il est déterminé que le fonctionnement de la soufflante (70) sert à faire s'écouler ou faire circuler l'air ambiant au travers du volume intérieur de l'appareil avec un deuxième facteur de marche d'activation ou un deuxième débit moyen, la soufflante fonctionne alors à la valeur la plus élevée des premier et deuxième facteurs de marche d'activation ou des premier et deuxième débits moyens.

12. Procédé selon l'une quelconque des revendications précédentes, dans lequel l'appareil de traitement (1) est un lave/sèche-linge et la chambre de traitement de linge (22, 28) comprend une cuve (22) et un tambour (28) agencé rotatif à l'intérieur de la cuve.

13. Appareil de traitement de linge (1), plus particulièrement un sèche-linge ou un lave/sèche-linge, comprenant :
un caisson (5) qui abrite les composants de l'appareil de traitement,
une chambre de traitement de linge (22, 28) adaptée à traiter du linge qu'elle contient,
un agencement de circulation d'air de séchage (20, 22) adapté à faire circuler de l'air de séchage au travers de la chambre de traitement (22, 28), l'air de séchage étant guidé dans un canal d'air de séchage (20) depuis une sortie de chambre de traitement (24) jusqu'à une entrée de chambre de traitement (26) de telle manière que la chambre de traitement et le canal d'air de séchage forment une boucle d'air de séchage,
une unité de détection de première température adaptée à détecter un premier état de température indiquant la température ambiante (Tamb), qui est ambiante pour l'appareil de traitement ou le caisson (5) de l'appareil de traitement,
une soufflante de conduction d'air ambiant (70) adaptée à faire s'écouler ou faire circuler de l'air ambiant au travers d'un volume intérieur de l'appareil, le volume intérieur étant intérieur au caisson (5) mais extérieur à l'agencement de circulation d'air de séchage (20, 22),
une unité de situation de fonctionnement (46, 48, 66 ; 38) adaptée à indiquer l'état de lancement de fonctionnement de l'appareil de traitement,
une température de sortie de tambour (Tout) détectée par un capteur de température de sortie (48),
une température d'entrée de tambour (Tin) détectée par un capteur de température d'entrée (46),
pour la détection de la température ambiante (Tamb) : un capteur de température ambiante (50) ou un capteur de température d'élément chauffant (66) ou un capteur de température de frigorigène (52) ou un capteur de température de compresseur (54) ou un capteur d'onduleur de compresseur (62), ou une combinaison d'au moins deux des signaux de température des capteurs : capteur de température d'entrée (46), capteur de température de sortie (48), capteur de température ambiante (50), capteur de température de frigorigène (52), capteur d'onduleur de compresseur (62), capteur de température d'élément chauffant (66), et
une unité de commande (38) adaptée à commander l'exécution d'un processus de traitement de linge selon l'une quelconque des revendications précédentes.
